(19) **Europäisches Patentamt European Patent Office Office européen des brevets**

(11) **EP 4 508 339 B1**

(12) **EUROPEAN PATENT SPECIFICATION**

(45) Date of publication and mention of the grant of the patent:
**06.05.2026 Bulletin 2026/19**

(21) Application number: **23713929.0**

(22) Date of filing: **28.03.2023**

(51) International Patent Classification (IPC):
*F16B 1/00* *(2006.01)* *F16B 37/00* *(2006.01)*

(52) Cooperative Patent Classification (CPC):
**F16B 37/00;** F16B 2200/95

(86) International application number:
**PCT/EP2023/057952**

(87) International publication number:
**WO 2023/198443 (19.10.2023 Gazette 2023/42)**

(54) **MARKED THREADED FASTENER MANUFACTURE AND FASTENER**

HERSTELLUNG VON BEFESTIGUNGSELEMENTEN MIT MARKIERUNG UND BEFESTIGUNGSELEMENT

FABRICATION D'UN ÉLÉMENT DE FIXATION FILETÉ MARQUÉ ET ÉLÉMENT DE FIXATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **12.04.2022 EP 22167761**

(43) Date of publication of application:
**19.02.2025 Bulletin 2025/08**

(73) Proprietor: **Hilti Aktiengesellschaft 9494 Schaan (LI)**

(72) Inventors:
• **SPAMPATTI, Matteo 9470 Buchs (CH)**
• **KURZ, Tobias 9472 Grabs (CH)**
• **WIELGAT, Marcin 9472 Grabs (CH)**

(74) Representative: **Hilti Aktiengesellschaft Corporate Intellectual Property Feldkircherstrasse 100 Postfach 333 9494 Schaan (LI)**

(56) References cited:
CN-A- 107 655 610      DE-A1- 102021 106 817
US-A1- 2007 152 046

EP 4 508 339 B1

**Description**

The invention relates to a method for manufacturing a marked threaded fastener and to a threaded fastener.

EP1171716 B1 describes threaded nuts having 2D barcodes located thereon.

DE 102021106817 A1 discloses providing optoelectronically readable code on a nut, wherein a distance of the code from edges of wrench surfaces of the nut is proposed.

Applying barcodes to threaded fasteners, such as nuts, can pose technical challenges, in particular when the fasteners are steel fasteners, such as carbon steel fasteners or stainless-steel fasteners, provided with a hydrophobic functional coating, such as a friction-modifying coating and/or a corrosion protective coating.

- Laser-marking might damage surfaces, thereby promoting corrosion.
- Throughput of laser-marking might be limited, which might be disadvantageous in view of mass production.
- Ink printing might imply adhesion issues when printing on functional top coatings, resulting in the code marking being not environmentally robust enough for certain applications, in particular outdoor applications
- Markings on bright surfaces might be difficult to read out.

It is an object to provide a method for manufacturing a fastener attending these and/or other technical challenges, and/or to provide a durable and machine scannable marking solution, in particular for carbon steel or stainless fasteners, in particular suitable for mass production.

The object is solved by a method according to claim 1 and by a fastener according to claim 9. Dependent claims describe preferred embodiments of the method.

The invention proposes a method for manufacturing a marked threaded fastener comprising,

- a providing step, in which a threaded fastener having at least one marking surface is provided,
- following the providing step, a roughening step, in which the marking surface is roughened, in particular mechanically roughened, and
- following the roughening step, a marking step, in which a marking is applied to the at least one marking surface, in particular over the at least one coating layer, wherein the roughening step is a sandblasting step, in which the marking surface is roughened by sandblasting.

The invention moreover proposes a threaded fastener, manufactured by the method described here, having a marking surface, on top of which at least one coating layer or overcoat layer is provided, on top of which at least one marking is provided, wherein the marking surface has gloss ranging from 5 gloss units (GU) to 50 gloss units (GU), inclusive. Accordingly, the gloss is >= 5 GU and <=50 GU.

Accordingly, the threaded fastener is explicitly roughened before the code is applied by printing. Increased surface roughness resulting from the roughening step might increasing adhesion of the subsequently applied marking. Additionally or alternatively, said increased surface roughness might entail increased dullness, which in term might improve readability of the marking.

The roughening step can include roughening the entire surface of the threaded fastener or just parts of said surface. The marking typically extends only over a part of the at least one marking surface, but it might also extend over the entirety of the at least one marking surface. The marking is typically limited to the at least one marking surface, but in other embodiments, the marking might also extend beyond the at least one marking surface, into other surface areas of the threaded fastener.

The marking surface is the surface on which the marking is intended to be placed. Preferably, the marking surface is a spanner flat, that is a usually generally flat surface intended to be engaged by a spanner or a wrench for imparting torque onto the threaded fastener. Preferably, the threaded fastener has six spanner flats so as to form a hex drive.

The threaded fastener could for example be a screw. Preferentially, the threaded fastener is a nut having a threaded bore therein. The nut can be placed on the shaft of an expansion anchor.

The roughening step is a sandblasting step, in which the marking surface is roughened by sandblasting. Sandblasting includes propelling a stream of abrasive material against the marking surface. This may provide for particularly efficient roughening.

The method might be particularly suitable for steel fasteners, more preferably stainless-steel fasteners.

It is advantageous that in the roughening step, the marking surface is roughened to have a gloss ranging from 5 gloss units to 50 gloss units, inclusive (i.e. the gloss is >= 5 GU and <=50 GU). This can provide particularly good readability and/or adhesion of overlayers.

Preferably, the method further comprises, following the roughening step, a coating step, in which the roughened marking surface is coated with at least one coating layer or with at least one overcoat layer, wherein the marking step follows the coating step. This can further improve performance and/or durability. The coating step can include coating the entire surface of the threaded fastener or just parts of said surface.

The at least one coating layer or at least one overcoat layer is preferably a lubricant layer and/or water-based or solvent-based. Additional coatings can be applied, in addition to the at least one coating layer or at least one overcoat layer. In particular, in the marking step, the marking is applied to the at least one marking surface on top of the at least one coating layer.

The marking step could imply applying the marking by laser-marking. However, it is particularly preferred that the marking step is a printing step, in which the marking is printed on the at least one marking surface, in particular over the at least one coating layer. Applying the marking by printing, in particular ink jet printing, might allow for particularly high throughput.

The marking is preferably a barcode, in particular a 2D barcode, for example a QR code or a DMC code.

Features described here in connection with the fastener can also applied to the method, and vice versa.

The invention is explained in greater detail below with reference to preferred exemplary embodiments, which are depicted schematically in the accompanying drawings. Individual features of the exemplary embodiments presented below can be implemented either individually or in any combination within the scope of the present invention.

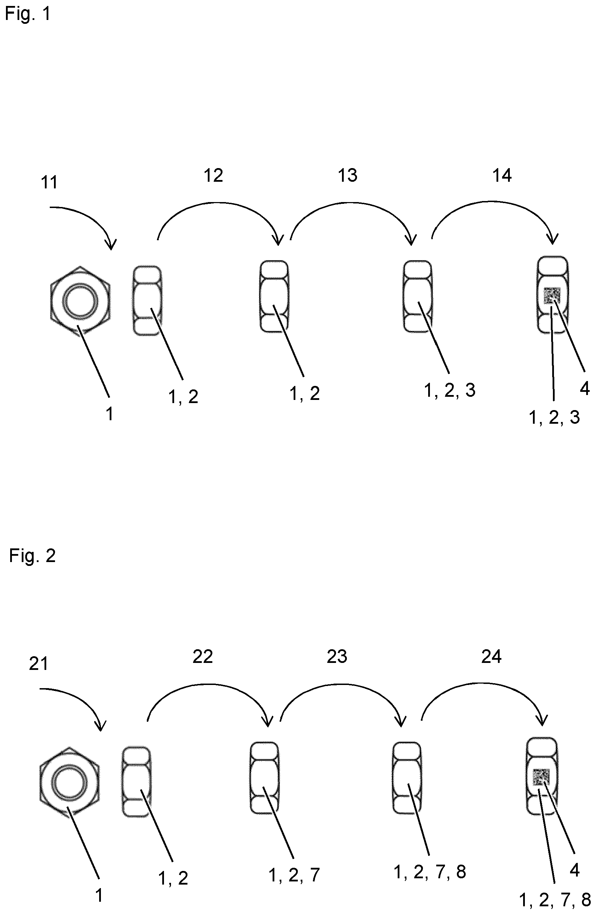

Figure 1 shows the step sequence of a first embodiment of a method for manufacturing a marked threaded fastener. The method illustrated in figure 1 is particularly suitable for stainless steel fasteners. The sequence starts with a providing step 11, in which a threaded fastener 1 having at least one marking surface 2 is provided. In the shown embodiment, the threaded fastener 1 is, by way of example a nut having an internally threaded bore therein. Alternatively, it could also be a screw having an external thread structure. Preferably, the threaded fastener 1 consists, as already mentioned, of stainless steel. The at least one marking surface 2 is a spanner flat. By way of example, the provided threaded fastener 1 comprises a total of six spanner flats.

The providing step 11 is followed by a roughening step 12, in which at least the marking surface 2 is roughened. The roughening step 12 is a sandblasting step, in which at least the marking surface 2 is roughened by means of sandblasting. Roughening implies increasing surface roughness, in particular for increasing adhesion of a coating layer 3 or a marking 4, on the marking surface 2. In particular, the marking surface 2 is roughened to have a gloss ranging from 5 gloss units to 50 gloss units, inclusive, in the roughening step 12.

Following the roughening step 12, a coating step 13 is provided, in which the roughened marking surface 2 is coated with at least one coating layer 3, for example a friction-decreasing or friction-increasing coating layer. Advantageously, the least one coating layer 3 is applied to the entire surface of the threaded fastener 1.

The coating step 13 is followed by a marking step 14, in which a marking 4, preferably a barcode, in particular a 2D barcode such as a DMC code or a QR code, is applied to the at least one marking surface 2. The marking 4 is applied over the at least one coating layer 3 in the coating step 13, which means that the coating layer 3 is sandwiched between the marking 4 and the marking surface 2. In particular, the marking step 14 is a printing step, in which the marking 4 is printed, preferably ink jet printed, on the at least one marking surface 2.

Figure 2 shows the step sequence of a second embodiment of a method for manufacturing a marked threaded fastener, which is not within the scope of the appended claims. The method illustrated in figure 2 is particularly suitable for carbon steel fasteners. The sequence starts with a providing step 21, in which a threaded fastener 1 having at least one marking surface 2 is provided. In the shown embodiment, the threaded fastener 1 is, by way of example a nut having an internally threaded bore therein. Alternatively, it could also be a screw having an external thread structure. Preferably, the threaded fastener 1 provided consists, as already mentioned, of carbon steel. The at least one marking surface 2 is a is a spanner flat. By way of example, the provided threaded fastener 1 comprises a total of six spanner flats.

The providing step 21 is followed by a roughening step 22, in particular a chemical roughening step, in which at least the marking surface 2, preferably the entire surface of the threaded fastener 1, is covered with an anti-corrosion material layer 7, preferably by means of dull zinc plating. Thus, the anti-corrosion layer 7 is preferably a dull zinc layer. In particular, the anti-corrosion layer 7 provides the marking surface 2 with a gloss ranging from 5 gloss units to 50 gloss units, inclusive.

Following the roughening 22, a coating step 23 is provided, in which the dull zinc plated marking surface 2 is overcoated with at least one overcoat layer 8, for example a friction-decreasing or friction-increasing overcoat layer. Advantageously, the least one overcoat layer 8 is applied to the entire surface of the threaded fastener 1.

The coating step 23 is followed by a marking step 24, in which a marking 4, preferably a barcode, in particular a 2D barcode such as a DMC code or a QR code, is applied to the at least one marking surface 2. The marking 4 is applied over the anti-corrosion layer 7 and over the at least one overcoat layer 8 in the coating step 13, which means that the coating layer 3 and the at least one overcoat layer 8 are sandwiched between the marking 4 and the marking surface 2. In particular, the marking step 14 is a printing step, in which the marking 4 is printed, preferably ink jet printed, on the at least one marking surface 2.

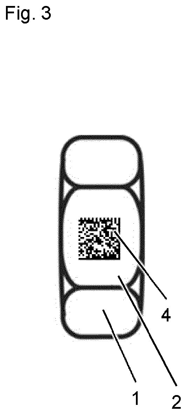

Figure 3 shows a marked threaded fastener 1 that may be obtained by the method shown in figure 1 or by the method shown in figure 2. The marked threaded fastener 1 is provided with a marking 4 applied to a marking surface 2, wherein the marking surface 2 has a gloss ranging from 5 gloss units to 50 gloss units, inclusive (in particular adjacent to the marking 4).

The marking 4 can be sized as follows:

For the marking area x, that is the surface area of the marking 4, the following relation can apply:

$$x = \begin{cases} \{x \in \mathbb{R} \mid 12 < x < 17\}, & if\ M < 7.5 \\ \{x \in \mathbb{R} \mid 12 < x < M^3 * 0.175 + M^2 * (-3.16) + M * 17.9 - 12.5\}, & if\ 7.5 \le M \le 12 \\ \{x \in \mathbb{R} \mid 12 < x < 50\}, & else \end{cases}$$

wherein the marking area x is in mm$^2$, and M is the thread size of the threaded fastener 1 in mm.

For the aspect ratio y of the marking 4, which is the ratio of its longer side to its shorter size,

$$y = \frac{longer\ side}{shorter\ side},$$

the following relation might apply:

$$y = \left\{ y \in \mathbb{R} \mid 1 \le y \le x * \frac{8.3}{100} \right\}$$

wherein x is again the marking area in mm$^2$.

## Claims

1. Method for manufacturing a marked threaded fastener (1) comprising,

   - a providing step (11), in which a threaded fastener (1) having at least one marking surface (2) is provided,
   - following the providing step (11), a roughening step (12), in which the marking surface (2) is roughened, and
   - following the roughening step (12), a marking step (14), in which a marking (4) is applied to the at least one marking surface (2), wherein the roughening step (12) is a sandblasting step, in which the marking surface (2) is roughened by sandblasting.

2. Method according to claim 1,
   **characterized in that**
   the marking surface (2) is a spanner flat.

3. Method according to any of the preceding claims,
   **characterized in that**
   the threaded fastener (1) is a nut having a threaded bore therein.

4. Method according to any of the preceding claims,
   **characterized in that**
   the threaded fastener (1) is a stainless-steel fastener.

5. Method according to any of the preceding claims,
   **characterized in that**
   in the roughening step (12), the marking surface (2) is roughened to have a gloss ranging from 5 gloss units to 50 gloss units, inclusive.

6. Method according to any of the preceding claims,
   **characterized in that**
   the method further comprises, following the roughening step (12), a coating step (13), in which the roughened marking surface (2) is coated with at least one coating layer (3) or at least one overcoat layer (8), wherein the marking step (14) follows the coating step (13).

7. Method according to any of the preceding claims,
   **characterized in that**

the marking step (14) is a printing step, in which the marking (4) is printed on the at least one marking surface (2).

8. Method according to any of the preceding claims,
   **characterized in that**
   the marking (4) is a barcode.

9. Threaded fastener (1), manufactured by a method according to any of the preceding claims, having a marking surface (2), on top of which at least one coating layer (3) or overcoat layer (8) is provided, on top of which at least one marking (4) is provided, wherein the marking surface (2) has gloss ranging from 5 gloss units to 50 gloss units, inclusive.

**Patentansprüche**

1. Verfahren zum Herstellen eines markierten Gewindebefestigungselements (1), umfassend,

   - einen Bereitstellungsschritt (11), in dem ein Gewindebefestigungselement (1), das mindestens eine Markierungsoberfläche (2) aufweist, bereitgestellt wird,
   - nach dem Bereitstellungsschritt (11) einen Aufrauungsschritt (12), in dem die Markierungsoberfläche (2) aufgeraut wird, und
   - nach dem Aufrauungsschritt (12) einen Markierungsschritt (14), in dem eine Markierung (4) auf die mindestens eine Markierungsoberfläche (2) aufgebracht wird, wobei der Aufrauungsschritt (12) ein Sandstrahlungsschritt ist, in dem die Markierungsoberfläche (2) durch Sandstrahlen aufgeraut wird.

2. Verfahren nach Anspruch 1,
   **dadurch gekennzeichnet, dass**
   die Markierungsoberfläche (2) eine Schlüsselfläche ist.

3. Verfahren nach einem der vorstehenden Ansprüche,
   **dadurch gekennzeichnet, dass**
   das Gewindebefestigungselement (1) eine Mutter ist, die eine Gewindebohrung darin aufweist.

4. Verfahren nach einem der vorstehenden Ansprüche,
   **dadurch gekennzeichnet, dass**
   das Gewindebefestigungselement (1) ein Edelstahlbefestigungselement ist.

5. Verfahren nach einem der vorstehenden Ansprüche,
   **dadurch gekennzeichnet, dass**
   in dem Aufrauungsschritt (12) die Markierungsoberfläche (2) aufgeraut wird, um einen Glanz in einem Bereich von 5 Glanzeinheiten bis 50 Glanzeinheiten, einschließlich, aufzuweisen.

6. Verfahren nach einem der vorstehenden Ansprüche,
   **dadurch gekennzeichnet, dass**
   das Verfahren nach dem Aufrauungsschritt (12) ferner einen Beschichtungsschritt (13) umfasst, in dem die aufgeraute Markierungsoberfläche (2) mit mindestens einer Beschichtungslage (3) oder mindestens einer Deckschichtlage (8) beschichtet wird, wobei der Markierungsschritt (14) dem Beschichtungsschritt (13) folgt.

7. Verfahren nach einem der vorstehenden Ansprüche,
   **dadurch gekennzeichnet, dass**
   der Markierungsschritt (14) ein Druckschritt ist, in dem die Markierung (4) auf die mindestens eine Markierungsoberfläche (2) gedruckt wird.

8. Verfahren nach einem der vorstehenden Ansprüche,
   **dadurch gekennzeichnet, dass**
   die Markierung (4) ein Strichcode ist.

9. Gewindebefestigungselement (1), hergestellt durch ein Verfahren nach einem der vorstehenden Ansprüche, das eine Markierungsoberfläche (2) aufweist, auf der mindestens eine Beschichtungslage (3) oder Deckschichtlage (8) bereitgestellt ist, auf der mindestens eine Markierung (4) bereitgestellt ist, wobei die Markierungsoberfläche (2) Glanz in einem Bereich von 5 Glanzeinheiten bis 50 Glanzeinheiten, einschließlich, aufweist.


**Revendications**

1.  Procédé de fabrication d'un élément de fixation fileté marqué (1) comprenant,

    - une étape de fourniture (11), dans laquelle un élément de fixation fileté (1) ayant au moins une surface de marquage (2) est fourni,
    - après l'étape de fourniture (11), une étape de rugosification (12), dans laquelle la surface de marquage (2) est rendue rugueuse, et
    - après l'étape de rugosification (12), une étape de marquage (14), dans laquelle un marquage (4) est appliqué sur l'au moins une surface de marquage (2), dans lequel l'étape de rugosification (12) est une étape de sablage, dans laquelle la surface de marquage (2) est rendue rugueuse par sablage.

2.  Procédé selon la revendication 1,
    **caractérisé en ce que**
    la surface de marquage (2) est un méplat de clé.

3.  Procédé selon l'une quelconque des revendications précédentes,
    **caractérisé en ce que**
    l'élément de fixation fileté (1) est un écrou ayant un alésage fileté à l'intérieur de celui-ci.

4.  Procédé selon l'une quelconque des revendications précédentes,
    **caractérisé en ce que**
    l'élément de fixation fileté (1) est un élément de fixation en acier inoxydable.

5.  Procédé selon l'une quelconque des revendications précédentes,
    **caractérisé en ce que**
    lors de l'étape de rugosification (12), la surface de marquage (2) est rendue rugueuse pour avoir une brillance allant de 5 unités de brillance à 50 unités de brillance, bornes incluses.

6.  Procédé selon l'une quelconque des revendications précédentes,
    **caractérisé en ce que**
    le procédé comprend en outre, après l'étape de rugosification (12), une étape de revêtement (13), dans laquelle la surface de marquage (2) rendue rugueuse est revêtue d'au moins une couche de revêtement (3) ou d'au moins une couche de recouvrement (8), dans lequel l'étape de marquage (14) suit l'étape de revêtement (13).

7.  Procédé selon l'une quelconque des revendications précédentes,
    **caractérisé en ce que**
    l'étape de marquage (14) est une étape d'impression, dans laquelle le marquage (4) est imprimé sur l'au moins une surface de marquage (2).

8.  Procédé selon l'une quelconque des revendications précédentes,
    **caractérisé en ce que**
    le marquage (4) est un code-barres.

9.  Élément de fixation fileté (1), fabriqué par un procédé selon l'une quelconque des revendications précédentes, ayant une surface de marquage (2)au-dessus de laquelle au moins une couche de revêtement (3) ou une couche de recouvrement (8) est pourvue, au-dessus de laquelle au moins un marquage (4) est pourvu, dans lequel la surface de marquage (2) a une brillance allant de 5 unités de brillance à 50 unités de brillance, bornes incluses.

Fig. 1

11   12   13   14

1, 2   1, 2   1, 2, 3   4

1   1, 2, 3

Fig. 2

21   22   23   24

1, 2   1, 2, 7   1, 2, 7, 8   4

1   1, 2, 7, 8

Fig. 3

**EP 4 508 339 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1171716 B1

- DE 102021106817 A1